# EUROPEAN PATENT APPLICATION

(11) **EP 4 742 833 A1**
(43) Date of publication of application: **13.05.2026**
(21) Application number: 25206113.0
(22) Date of filing: 01.10.2025
(51) Int. Cl.: H05B 6/06, H05B 6/14

(54) **INDUCTION HEATED ROLL APPARATUS**

(30) Priority: 11.11.2024 JP 2024196719
(71) Applicant: Tokuden Co., Ltd., Kyoto-shi Kyoto 607-8345 (JP)
(72) Inventor: KIMURA, Masayoshi, Kyoto-shi, Kyoto, 607-8345 (JP)
(74) Representative: HKW Intellectual Property PartG mbB

(57) **Abstract**

A signal transmission device for transmitting a detection signal of a temperature sensor provided to a roll, includes: a light transmission unit provided on a rotating side of an apparatus which outputs light in accordance with the detection signal; a light reception unit provided on a stationary side of the apparatus which receives light from the light transmission unit; a rotary transformer, in which a stationary-side coil and a rotating-side coil are electromagnetically coupled, that supplies power to the light transmission unit in a contactless manner; and an adjustment unit that adjusts an alternating-current voltage supplied to the stationary-side coil. The stationary-side coil and the rotating-side coil delineate an annular shape wound around a rotation axis of the roll, and are provided facing each other with a gap therebetween along the rotation axis direction. The adjustment unit supplies reference voltage for the light transmission unit to the rotating-side coil.

## Description

### BACKGROUND

### TECHNICAL FIELD

The present disclosure relates to an induction heated roll apparatus.

### BACKGROUND ART

Having been conventionally developed, in order to control the heating temperature of a roll included in an induction heated roll apparatus, is an induction heated roll apparatus including a roll provided with an internal temperature sensor, and a signal transmission device configured to transmit a detection signal of the temperature sensor to a temperature control device provided on a stationary side of the apparatus, in a contactless manner, as disclosed in JP 2022-55545 A.

This signal transmission device includes: a light transmission unit that is provided on a rotating side of the apparatus and that outputs light in accordance with a detection signal; a light reception unit that is provided on the stationary side and that receives the light from the light transmission unit; and a rotary transformer that includes a stationary-side coil and a rotating-side coil electromagnetically coupled to each other, and that supplies power to the light transmission unit, in a contactless manner. Each of the stationary-side coil and the rotating-side coil of the rotary transformer has a cylindrical shape wound about a rotation axis of the roll, and is provided in a manner facing the other in a radial direction.

### REFERENCE DOCUMENT

Patent Document 1: JP 2022-55545 A

### SUMMARY

In a conventional configuration in which a stationary-side coil and a rotating-side coil are provided facing each other in a radial direction (in other words, the coils are concentric), a distance of a gap between the stationary-side coil and the rotating-side coil is less likely to change, so that power can be supplied stably to a light transmission unit.

By contrast, in a configuration in which the stationary-side coil and the rotating-side coil are provided facing each other in a direction of a rotation axis (axial direction) of a roll, the distance of the gap between the stationary-side coil and the rotating-side coil may change due to an assembly error in a signal transmission device. The distance of the gap between the stationary-side coil and the rotating-side coil may also change during an operation of an induction heated roll apparatus due to a difference in thermal expansions of members such as the roll.

If the distance of the gap between the stationary-side coil and the rotating-side coil changes, as described above, a voltage necessary for the light transmission unit to operate may fail to be supplied to the rotating-side coil. Although it is conceivable to supply alternating-current voltage high enough for the stationary-side coil to supply the voltage necessary for the light transmission unit to operate, to the stationary-side coil, regardless of the distance of the gap between the rotating-side coil and the stationary-side coil, power is consumed wastefully.

With the foregoing in view, the present disclosure has been made to solve the problems described above, and a main object of the present disclosure is to improve the stability of light transmission, while suppressing power consumption, of the signal transmission device for transmitting a detection signal of a temperature sensor provided to a roll to a stationary side.

That is, the induction heated roll apparatus according to the present disclosure includes: the roll that is hollow and is rotatably provided about the rotation axis; an induction heating mechanism disposed in a hollow space of the roll; the temperature sensor provided in the roll and configured to detect a temperature of the roll; and the signal transmission device configured to transmit the detection signal of the temperature sensor to a temperature control device on the stationary side of the apparatus, in a contactless manner, in which the signal transmission device includes: a light transmission unit provided on a rotating side of the apparatus and configured to output light in accordance with the detection signal; a light reception unit provided on the stationary side and configured to receive the light from the light transmission unit; a rotary transformer including the stationary-side coil and the rotating-side coil that are electromagnetically coupled to each other, and configured to supply the power to the light transmission unit in a contactless manner; and an alternating-current voltage adjustment unit configured to adjust the alternating-current voltage to be supplied to the stationary-side coil, in which the stationary-side coil and the rotating-side coil delineate an annular shape that is wound around the rotation axis of the roll, and are provided in a manner facing each other with a gap between the stationary-side coil and the rotating-side coil along a rotation axis direction of the roll, and in which the alternating-current voltage adjustment unit supplies a reference voltage necessary for the light transmission unit to operate, to the rotating-side coil, by adjusting a frequency or an amplitude of the alternating-current voltage.

With such a configuration, in the configuration in which the stationary-side coil and the rotating-side coil are provided facing each other in the rotation axis direction of the roll, by adjusting the frequency or the amplitude of the alternating-current voltage to be supplied to the stationary-side coil, the reference voltage necessary for the light transmission unit to operate is supplied to the rotating-side coil. Therefore, even if the gap between the rotating-side coil and the stationary-side coil of the rotary transformer varies due to an assembly error or thermal expansion of the induction heated roll apparatus, it is possible to supply the optimal voltage for the operation of the light transmission unit. Consequently, the stability of light transmission can be improved while suppressing the power consumption, in the signal transmission device for transmitting a detection signal of the temperature sensor provided to the roll, to the stationary side.

Preferably, the light transmission unit and the light reception unit are disposed along the rotation axis of the roll, with the rotary transformer interposed between the light transmission unit and the light reception unit, and transmit and receive light through center openings of the stationary-side coil and the rotating-side coil.
With this configuration, the light transmission unit and the light reception unit can be disposed on the inner side of the stationary-side coil and the rotating-side coil in a view in the direction of the rotation axis of the roll, and the radial size of the signal transmission device can be reduced.

Preferably, the light transmission unit includes a light-emitting element disposed on a rotation axis of the roll, and the light reception unit includes a light-receiving element disposed on the rotation axis of the roll.

With this configuration, because the positions of the light-emitting element and the light-receiving element do not change as the roll is rotated, it is possible to improve the stability of light transmission.

In order to improve durability, safety, insulation property, or the like of the rotary transformer, the rotary transformer preferably further includes a stationary-side resin seal in which the stationary-side coil is sealed with an insulating resin, and a rotating-side resin seal in which the rotating-side coil is sealed with the insulating resin.
In this configuration, the stationary-side resin seal preferably has a pass-through part corresponding to the center opening of the stationary-side coil; the rotating-side resin seal has a pass-through part corresponding to the center opening of the rotating-side coil; and the light transmission unit and the light reception unit transmit and receive light through the pass-through parts of the stationary-side resin seal and the rotating-side resin seal.

In order to improve the power feeding efficiency of the rotary transformer, the stationary-side resin seal preferably seals the stationary-side coil, together with a plurality of ferrite cores that are disposed radially with respect to a winding center of the stationary-side coil, and the rotating-side resin seal seals the rotating-side coil, together with a plurality of ferrite cores that are disposed radially with respect to a winding center of the rotating-side coil.

With the present disclosure configured as described above, it is possible to improve the stability of light transmission, while suppressing power consumption, in the signal transmission device for transmitting a detection signal of the temperature sensor provided to the roll, to the stationary side.

### BRIEF DESCRIPTION OF THE DRAWINGS

FIG. 1 is a cross-sectional view schematically illustrating a configuration of an induction heated roll apparatus according to one embodiment of the present disclosure;
FIG. 2 is a cross-sectional view schematically illustrating a configuration of a signal transmission device according to the embodiment;
FIG. 3 is a simplified circuit diagram including a rotary transformer according to the embodiment; and
FIG. 4 is a graph indicating coil characteristics of the rotary transformer according to the embodiment.

### DETAILED DESCRIPTION

An induction heated roll apparatus according to one embodiment of the present disclosure will now be explained with reference to drawings.

### <1. Configuration of Apparatus>

An induction heated roll apparatus 100 according to this embodiment is used in continuous thermal treatment of a continuous material, such as a sheet material or a web material, examples of which include a plastic film, paper, cloth, nonwoven fabric, synthetic fiber, metal foil, or a linear (fibrous) material.

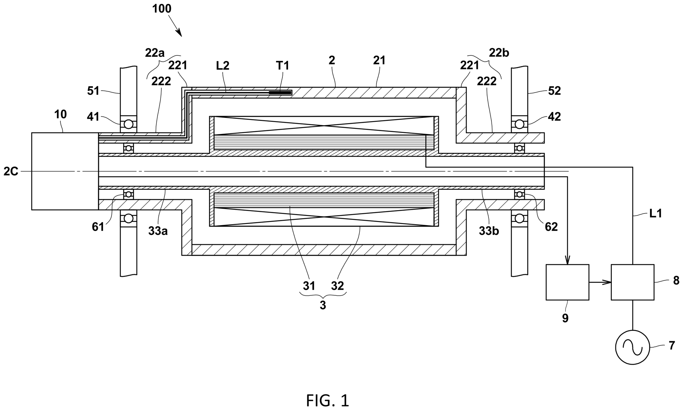

Specifically, as illustrated in FIG. 1, the induction heated roll apparatus 100 includes a roll 2 that is hollow and supported rotatably, and an induction heating mechanism 3 that is disposed stationarily inside the hollow space of the roll 2.

The roll 2 includes a roll body 21 that is cylindrical, and a pair of journals 22a, 22b provided at respective ends of the roll body 21. Each of the journals 22a, 22b has a flange 221 covering an end opening of the roll body 21, and a hollow journal shaft 222 provided integrally with the flange 221. The journal shafts 222 are rotatably supported by bases 51, 52, respectively, with respective bearings 41, 42, such as rolling bearings, interposed therebetween. The roll 2 is configured to be rotated by an external driving force, e.g., by a rotation driving mechanism (not illustrated) such as a motor.

The roll body 21 of the roll 2 may be provided with a plurality of jacket chambers extending in a longitudinal direction (rotation axis direction), at some intervals, e.g., at equal intervals, along the entire circumferential direction, with a gas-liquid two-phase heating Remedium sealed inside the jacket chambers. With the latent heat transfer of this gas-liquid two-phase heating medium sealed in the jacket chambers, the surface temperature of the roll body 21 is equalized.

The induction heating mechanism 3 includes a cylindrical iron core 31 having a cylindrical shape, an induction coil 32 wound around the outer circumferential surface of the cylindrical iron core 31, and support shafts 33a, 33b supporting the cylindrical iron core 31 and the induction coil 32. The support shafts 33a, 33b are provided to the respective ends of the cylindrical iron core 31. The support shafts 33a, 33b are inserted into the respective journal shafts 222, and are supported rotatably with respect to the journal shafts 222, with respective bearings 61, 62, such as rolling bearings, interposed therebetween. In this manner, the induction heating mechanism 3 is held inside the rotating roll 2 stationarily with respect to the bases 51, 52. To the induction coil 32, a lead wire L1 is connected, and an alternating-current power source 7 for applying alternating-current voltage is connected to the lead wire L1, with a power adjustment device 8 inserted therebetween.

When the alternating-current voltage is applied to the induction coil 32 by such an induction heating mechanism 3, an alternating magnetic flux is formed, and the alternating magnetic flux passes through the roll body 21 of the roll 2. With this passage of the magnetic flux, an induced current is generated inside the roll body 21, and the roll body 21 is Joule-heated by the induced current.

In the induction heated roll apparatus according to the embodiment, the roll body 21 is provided with a temperature sensor T1 for detecting the temperature of the roll body 21. A signal line L2 connected to the temperature sensor T1 is connected to a signal transmission device 10 that is provided to an end of the journal 22a. The signal transmission device 10 outputs temperature information to the external temperature control device 9. On the basis of the received temperature information, the temperature control device 9 controls the power adjustment device 8 to bring the temperature of the roll body 21 to a desirable temperature.

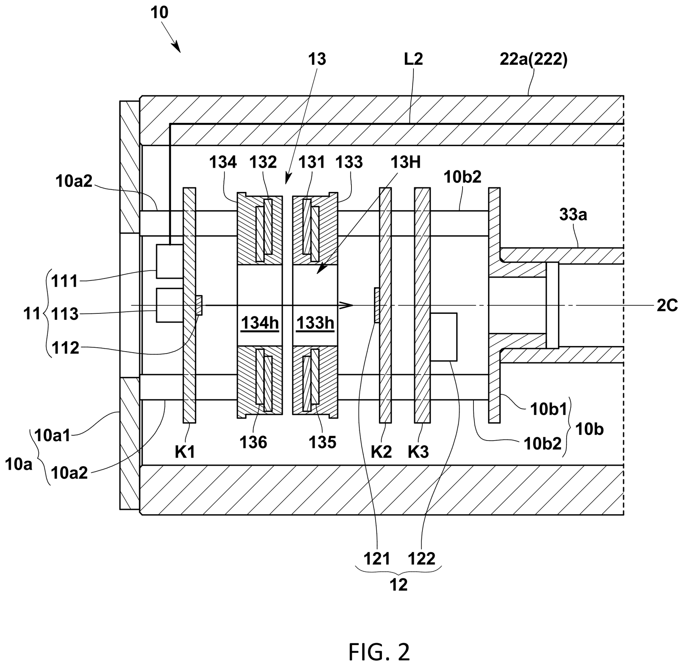

The signal transmission device 10 is a configuration for transmitting a detection signal from the temperature sensor T1 to the temperature control device 9 that is on the stationary side, in a contactless manner. The signal transmission device 10 includes, as illustrated in FIG. 2, a light transmission unit 11 provided on the rotating side and configured to output light in accordance with the detection signal; a light reception unit 12 provided on the stationary side and configured to receive the light from the light transmission unit 11; and a rotary transformer 13 configured to supply power to the light transmission unit 11 in a contactless manner.

The light transmission unit 11 includes a processing circuit 111 that processes the detection signal of the temperature sensor T1, and a light-emitting element 112 that emits light on the basis of the signal obtained by the processing circuit. The processing circuit 111 includes, for example, an amplifier circuit that amplifies the detection signal of the temperature sensor T1, an Analog-to-Digital (AD) converter circuit that converts the amplified detection signal into a digital signal, and a control circuit that controls the light-emitting element 112 on the basis of the digital signal obtained by the AD conversion circuit. The light transmission unit 11 also includes a power source circuit 113 that receives power from the rotary transformer 13 and supplies the power to the components of the light transmission unit 11.

The light reception unit 12 includes a light-receiving element 121 that receives the light from the light transmission unit 11, and a processing circuit 122 that processes a light intensity signal output from the light-receiving element 121. The processing circuit 122 includes, for example, an amplifier circuit that amplifies the light intensity signal from the light-receiving element 121, an AD converter circuit that converts the amplified light intensity signal into a digital signal, and a temperature converter circuit that converts the digital signal obtained by the AD conversion circuit into temperature data.

The rotary transformer 13 includes the stationary-side coil 131 and the rotating-side coil 132 that are provided along a rotation axis 2C of the roll 2, and electromagnetically coupled to each other.

Each of the stationary-side coil 131 and the rotating-side coil 132 has a ring-like shape (an annular shape, in this example) wound around the rotation axis 2C of the roll 2. The stationary-side coil 131 and the rotating-side coil 132 are provided in a manner facing each other, with a gap therebetween, in the direction of the rotation axis of the roll 2.

In this embodiment, the light transmission unit 11 and the light reception unit 12 are disposed along the rotation axis 2C of the roll 2, with the rotary transformer 13 interposed therebetween, and transmit and receive light through center openings 13H of the stationary-side coil 131 and the rotating-side coil 132. Specifically, the light-emitting element 112 of the light transmission unit 11 and the light-receiving element 121 of the light reception unit 12 are disposed in a manner facing each other with the center opening 13H therebetween, and are configured in such a manner that the light emitted from the light-emitting element 112 passes through the center opening 13H along the central axis of the roll 2, and is received at the light-receiving element 121.

In this embodiment, the light-emitting element 112 of the light transmission unit 11 is disposed on the rotation axis 2C of the roll 2, and the light-receiving element 121 of the light reception unit 12 is disposed on the rotation axis 2C of the roll 2. Therefore, the optical axis of the light-emitting element 112 of the light transmission unit 11 is matched with the central axis of the roll 2.

The rotary transformer 13 further includes a stationary-side resin seal 133 in which the stationary-side coil 131 is sealed with an insulating resin, and a rotating-side resin seal 134 in which the rotating-side coil 132 is sealed with the insulating resin.

The stationary-side resin seal 133 seals the stationary-side coil 131 and a plurality of ferrite cores 135 that are disposed radially with respect to the center of the winding of the stationary-side coil 131. The stationary-side resin seal 133 has a pass-through part 133h corresponding to the center opening 13H of the stationary-side coil 131, and delineates an annular shape.

The rotating-side resin seal 134 seals the rotating-side coil 132 and a plurality of ferrite cores 136 that are disposed radially with respect to the center of the winding of the rotating-side coil 132. The rotating-side resin seal 134 has a pass-through part 134h corresponding to the center opening 13H of the rotating-side coil 132, and delineates an annular shape. The stationary-side resin seal 133 and the rotating-side resin seal 134 have substantially the same outer diameters, and in this embodiment, also have substantially the same shape.

In this configuration, the light transmission unit 11 transmits light and the light reception unit 12 receives light, through the pass-through part 133h of the stationary-side resin seal 133 and the pass-through part 134h of the rotating-side resin seal 134.

Each of the light transmission unit 11 and the light reception unit 12 may be implemented using one or a plurality of substrates, and these substrates are disposed along the rotation axis 2C of the roll 2. In this embodiment, the light transmission unit 11, which is on the rotating side, is implemented using one substrate K1, and the light reception unit 12, which is on the stationary side, is implemented using two substrates K2, K3. Each of the substrates K1 to K3 has a circular shape in a plan view, but the shape is not limited thereto.

On the one substrate K1 included in the light transmission unit 11, the light-emitting element 112 is provided, on one surface thereof on the side facing the rotary transformer 13. On the one surface or the other surface of the substrate K1, the processing circuit 111 and the power source circuit 113 of the light transmission unit 11 are also implemented separately. Among the plurality of substrates K2, K3 of the light reception unit 12, the substrate K2 located on the side of the rotary transformer 13 is at least provided with the light-receiving element 121. The processing circuit 122 and the power source circuit (not illustrated) of the light reception unit 12 are also implemented separately, on the plurality of substrates K2, K3.

The signal transmission device 10 according to the embodiment also includes a rotating-side support 10a that supports the rotating-side coil 132 of the rotary transformer 13 and the light transmission unit 11, and a stationary-side support 10b that supports the stationary-side coil 131 of the rotary transformer 13 and the light reception unit 12.

The rotating-side support 10a is provided to an end of the journal shaft 222 of the one journal 22a. The rotating-side support 10a supports the rotating-side coil 132 and the light transmission unit 11 in a manner facing the side of the roll body 21 (inner side) inside the journal shaft 222. Specifically, the rotating-side support 10a includes a rotating-side fixing member 10a1 fixed to the end of the journal shaft 222, and a rotating-side support member 10a2 that is provided on the rotating-side fixing member 10a1 and supports the substrate K1 of the light transmission unit 11 and the rotating-side resin seal 134 (of the rotating-side coil 132) of the rotary transformer 13.

The stationary-side support 10b is provided to an end of one support shaft 33a. The stationary-side support 10b supports the stationary-side coil 131 and the light reception unit 12 in a manner facing the opposite side of the roll body 21 (outer side) inside the journal shaft 222. In other words, the stationary-side support 10b supports the stationary-side coil 131 in a manner facing the rotating-side coil 132. Specifically, the stationary-side support 10b includes a stationary-side fixing member 10b1 fixed to the end of the support shaft 33a, and a stationary-side support member 10b2 that is provided on the stationary-side fixing member 10b1 and supports the substrates K2, K3 of the light reception unit 12 and the stationary-side resin seal 133 (of the stationary-side coil 131) of the rotary transformer 13.

In this configuration, a power source cable for supplying power to the stationary-side coil 131 of the rotary transformer 13, the light reception unit 12, and the like, and a signal cable for extracting a signal from the light reception unit 12 are passed inside one of the support shafts 33a, through the other support shaft 33b, and wired outside of the roll 2.

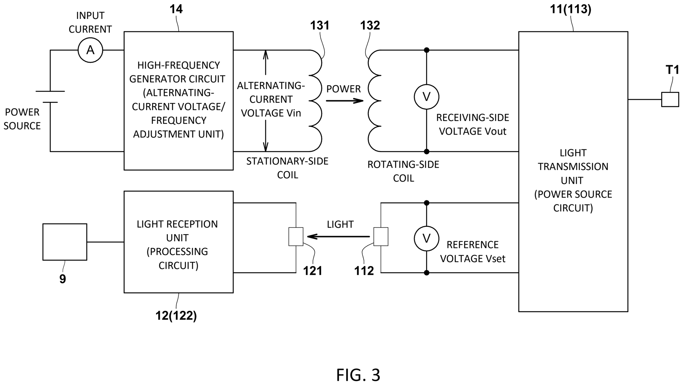

As illustrated in FIG. 3, the signal transmission device 10 according to the embodiment further includes an alternating-current voltage adjustment unit 14 that adjusts alternating-current voltage Vᵢₙ to be supplied to the stationary-side coil 131.

The alternating-current voltage adjustment unit 14 supplies reference voltage Vₛₑₜ necessary for the light transmission unit 11 to operate, to the rotating-side coil 132, by adjusting the frequency or amplitude of the alternating-current voltage Vᵢₙ to be supplied to the stationary-side coil 131. The alternating-current voltage adjustment unit 14 according to the embodiment also converts direct-current voltage from a direct-current power source into an alternating-current voltage. Note that the direct-current power source may be built in the temperature control device 9, may be implemented by the power adjustment device 8, or may be implemented by another direct-current power source.

This alternating-current voltage adjustment unit 14 may be provided to the substrate K2, K3 included in the light reception unit 12, or may be implemented by a control device provided outside the roll 2, for example.

The alternating-current voltage adjustment unit 14 is configured to, on the basis of alternating-current voltage to be supplied to the rotating-side coil 132 (receiving-side voltage Vₒᵤₜ), adjust the frequency or the amplitude of alternating-current voltage Vᵢₙ to be supplied to the stationary-side coil 131, so as to bring the receiving-side voltage Vₒᵤₜ to the reference voltage Vₛₑₜ necessary for the light transmission unit 11 to operate.

Specifically, the alternating-current voltage adjustment unit 14 adjusts the frequency or the amplitude of the alternating-current voltage Vᵢₙ to be supplied to the stationary-side coil 131 so that the reference voltage Vₛₑₜ ≤ the receiving-side voltage Vₒᵤₜ ≤ the reference voltage Vₛₑₜ + additional voltage α is established. The additional voltage α may be set to any voltage, and is, for example, a voltage enabling stable transmission of light during the operation of the apparatus, regardless of the variation in the distance of the gap between the stationary-side coil 131 and the rotating-side coil 132.

This receiving-side voltage Vₒᵤₜ at the rotating-side coil 132 can be fed back via the light transmission between the light transmission unit 11 and the light reception unit 12. If the alternating-current voltage adjustment unit 14 fails to receive a signal corresponding to the receiving-side voltage Vₒᵤₜ from the light transmission unit 11, the receiving-side voltage Vₒᵤₜ has not met the reference voltage Vₛₑₜ necessary for the light transmission unit 11 to operate. Therefore, in such a case, too, the alternating-current voltage adjustment unit 14 adjusts the frequency or amplitude of the alternating-current voltage Vᵢₙ to be supplied to the stationary-side coil 131.

One example of alternating-current voltage adjustment will now be explained.
For example, assuming that the alternating-current voltage Vᵢₙ supplied to the stationary-side coil 131 of the rotary transformer 13 is within a frequency range of 200 kHz or so, the rotary transformer 13 exhibits characteristics that, when the frequency of the alternating-current voltage Vᵢₙ is lowered, the receiving-side voltage Vₒᵤₜ (the voltage of the substrate that is on the receiving side) rises and the input current on the side of the power source also increases; and when the frequency is raised, the receiving-side voltage Vₒᵤₜ (the voltage of the substrate that is on the receiving side) drops and the input current on the side of the power source also decreases. Note that, depending on the frequency range, the characteristics exhibited by lowering or raising the frequency (raise or fall of the receiving-side voltage Vₒᵤₜ and increase or decrease of the input current) become reversed.

When the induction heated roll apparatus 100 is powered on, the alternating-current voltage Vᵢₙ having a temporary frequency (190 kHz) is supplied to the stationary-side coil 131 of the rotary transformer 13, and the receiving-side voltage Vₒᵤₜ is fed back, so as to adjust the frequency to the optimal frequency for bringing receiving-side voltage Vₒᵤₜ to the reference voltage Vₛₑₜ.

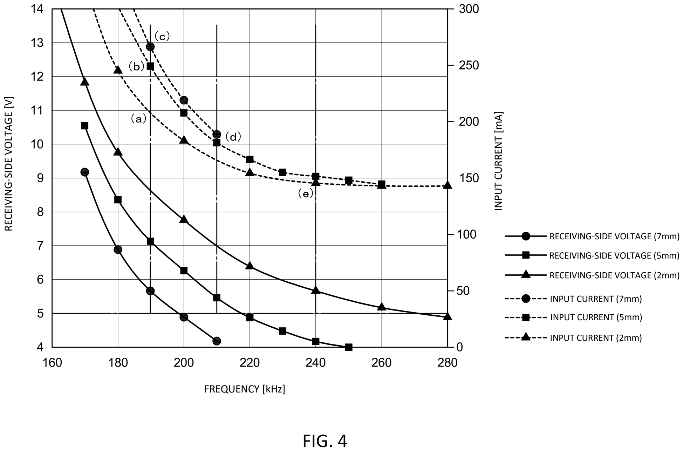

A specific example will now be explained. The reference voltage Vₛₑₜ necessary for the light transmission unit 11 to operate is at least 5 V.
Given the alternating-current voltage Vᵢₙ having a fixed frequency of 190 kHz, as illustrated in FIG. 4, when the distance of the gap between the stationary-side coil 131 and the rotating-side coil 132 was 2 mm, the input current was 200 mA (see point (a) in FIG. 4); when the gap distance was 5 mm, the input current was 250 mA (see point (b) in FIG. 4); and, when the gap distance was 7 mm, the input current was 270 mA (see point (c) in FIG. 4).
By contrast, when the alternating-current voltage Vᵢₙ was supplied at the temporary frequency (190 kHz) at the time of power-on and was adjusted to the optimal frequency, the optimal frequency was 240 kHz, with a gap distance of 2 mm, and the input current was 145 mA (see point (e) in FIG. 4). The input current was reduced by 27.5%, in comparison with that with the fixed frequency. Furthermore, when the gap distance was 5 mm, the optimal frequency was 210 kHz, and the input current was 180 mA (see point (d) in FIG. 4). The input current was reduced by 28.0%, in comparison with that with the fixed frequency. Furthermore, when the gap distance was 7 mm, the temporary frequency (190 kHz) was the optimal frequency, and the input current was 270 mA (see point (c) in FIG. 4).

### <3. Advantageous Effects Achieved by Embodiment>

With the induction heated roll apparatus 100 according to the embodiment configured as described above, in a configuration in which the stationary-side coil 131 and the rotating-side coil 132 are provided facing each other along the direction of the rotation axis of the roll 2, by adjusting the frequency or the amplitude of the alternating-current voltage Vᵢₙ supplied to the stationary-side coil 131, the reference voltage Vₛₑₜ necessary for the light transmission unit 11 to operate is supplied to the rotating-side coil 132. Therefore, even if the gap between the rotating-side coil 132 and the stationary-side coil 131 of the rotary transformer 13 varies due to the assembly error or the thermal expansion of the induction heated roll apparatus 100, it is possible to supply the optimal voltage for the operation of the light transmission unit 11. Consequently, the stability of light transmission can be improved while suppressing the power consumption, in the signal transmission device 10 that transmits a detection signal of the temperature sensor T1 provided to the roll 2 to the stationary side.

### <4. Other Modifications>

For example, in the embodiment described above, the stationary-side coil 131 is positioned on the inner side in the rotation axis direction, and the rotating-side coil 132 is positioned on the outer side in the rotation axis direction. However, it is also possible to use a reversed configuration, that is, a configuration in which the rotating-side coil 132 is positioned on the inner side in the rotation axis direction and the stationary-side coil 131 is positioned on the outer side in the rotation axis direction.

In such a configuration, the support shaft 33 is configured to be inserted through at least the center opening 13H of the rotating-side coil 132. Furthermore, the light transmission unit 11 and the light reception unit 12 may transmit and receive light through the center opening 13H of the stationary-side coil 131 and the rotating-side coil 132, or may transmit and receive light on the outer side of the stationary-side coil 131 and the rotating-side coil 132 in a radial direction.

In addition, it should be understood that the present disclosure is not limited to the embodiment described above, and various modifications may be made within the scope not departing from the gist of the present disclosure.

### REFERENCE CHARACTER LIST

- 100: induction heated roll apparatus
- 2: roll
- 3: induction heating mechanism
- T1: temperature sensor
- 9: temperature control device
- 10: signal transmission device
- 11: light transmission unit
- 112: light-emitting element
- 12: light reception unit
- 121: light-receiving element
- 13: rotary transformer
- 131: stationary-side coil
- 132: rotating-side coil
- 13H: center opening
- 133: stationary-side resin seal
- 133h: pass-through part
- 134: rotating-side resin seal
- 134h: pass-through part
- 135: ferrite core
- 136: ferrite core
- 14: alternating-current voltage adjustment unit

## Claims

1. An induction heated roll apparatus, comprising:
a roll that is hollow and is rotatably provided about a rotation axis;
an induction heating mechanism disposed in a hollow space of the roll;
a temperature sensor provided in the roll and configured to detect a temperature of the roll; and
a signal transmission device configured to transmit a detection signal of the temperature sensor to a temperature control device on a stationary side of the apparatus, in a contactless manner, the signal transmission device including:
a light transmission unit provided on a rotating side of the apparatus and configured to output light in accordance with the detection signal;
a light reception unit provided on the stationary side and configured to receive the light from the light transmission unit;
a rotary transformer including a stationary-side coil and a rotating-side coil that are electromagnetically coupled to each other, and configured to supply power to the light transmission unit in a contactless manner; and
an alternating-current voltage adjustment unit configured to adjust alternating-current voltage to be supplied to the stationary-side coil,
wherein the stationary-side coil and the rotating-side coil delineate an annular shape that is wound around the rotation axis of the roll, and are provided in a manner facing each other with a gap between the stationary-side coil and the rotating-side coil along a rotation axis direction of the roll, and
wherein the alternating-current voltage adjustment unit supplies a reference voltage necessary for the light transmission unit to operate, to the rotating-side coil, by adjusting a frequency or an amplitude of the alternating-current voltage.

2. The induction heated roll apparatus according to claim 1, wherein the light transmission unit and the light reception unit are disposed along the rotation axis of the roll, with the rotary transformer interposed between the light transmission unit and the light reception unit, and transmit and receive light through center openings of the stationary-side coil and the rotating-side coil.

3. The induction heated roll apparatus according to claim 2,
wherein the light transmission unit includes a light-emitting element disposed on the rotation axis of the roll, and
wherein the light reception unit includes a light-receiving element disposed on the rotation axis of the roll.

4. The induction heated roll apparatus according to claim 2,
wherein the rotary transformer further includes:
a stationary-side resin seal in which the stationary-side coil is sealed with an insulating resin; and
a rotating-side resin seal in which the rotating-side coil is sealed with the insulating resin,
wherein the stationary-side resin seal has a pass-through part corresponding to the center opening of the stationary-side coil,
wherein the rotating-side resin seal has a pass-through part corresponding to the center opening of the rotating-side coil, and
wherein the light transmission unit transmits light and the light reception unit receives light through the pass-through parts of the stationary-side resin seal and the rotating-side resin seal.

5. The induction heated roll apparatus according to claim 4,
wherein the stationary-side resin seal seals the stationary-side coil, together with a plurality of ferrite cores that are disposed radially with respect to a winding center of the stationary-side coil, and
wherein the rotating-side resin seal seals the rotating-side coil, together with a plurality of ferrite cores that are disposed radially with respect to a winding center of the rotating-side coil.
